# EUROPÄISCHE PATENTSCHRIFT

(11) **EP 1 814 776 B1**
(45) Veröffentlichungstag und Bekanntmachung des Hinweises auf die Patenterteilung: **07.01.2009**
(21) Anmeldenummer: 05799959.1
(22) Anmeldetag: 03.11.2005
(51) Int. Cl.: B62J 9/00

(54) **ZUBEHÖRTEIL UND MOTORRAD ZUM ANBRINGEN DES ZUBEHÖRTEILS**
ACCESSORY PIECE AND MOTORCYCLE FOR APPLICATION THEREOF
ACCESSOIRE ET MOTOCYCLETTE ASSOCIEE

(30) Priorität: 26.11.2004 DE 102004057128
(43) Veröffentlichungstag der Anmeldung: 08.08.2007
(73) Patentinhaber: Bayerische MotorenWerke Aktiengesellschaft, 80809 München (DE)
(72) Erfinder: HOHDORF, Volker, 86159 Augsburg (DE)
(86) Internationale Anmeldenummer: PCT/EP2005/011743
(87) Internationale Veröffentlichungsnummer: WO 2006/056299

(56) Entgegenhaltungen:
- EP-A- 1 076 003
- DE-A1- 3 125 460
- DE-U1- 29 823 838
- FR-A- 2 830 509

## Beschreibung

Die vorliegende Erfindung betrifft ein Zubehörteil und ein Motorrad zum Anbringen des Zubehörteils gemäß dem Oberbegriff der nebengeordneten Patentansprüche 1 und 5.

Die DE 31 25 460 A1 zeigt die Befestigung eines Tankrucksackes auf einem Motorrad. Hierfür sind an der Oberseite eines Kraftstofftanks zwei im Abstand und parallel zueinander angeordnete Profilschienen angebracht, in die der Tankrucksack mit entsprechenden Nutsteinen geführt und arretiert ist. Beim Anbringen muss daher der Tankrucksack mit seinen Gleitsteinen zunächst in die Profilschienen eingefädelt, sodann in die richtige Position verschoben und schließlich dort arretiert werden. Beim Abnehmen des Tankrucksacks andererseits muss zunächst die Arretierung gelöst werden. Erst dann lässt er sich aus den Profilschienen heraus ziehen.

Aufgabe der Erfindung ist es, ein Zubehörteil, wie einen Tankrucksack, in einfacher Weise an einem Motorrad zu befestigen. Hierfür soll das Motorrad entsprechend ausgestaltet sein.

Die Aufgabe wird durch die kennzeichnenden Merkmale der nebengeordneten Patentansprüche 1 und 5 gelöst. Vorteilhafte Ausgestaltungen und Weiterbildungen der Erfindung ergeben sich aus den Unteransprüchen.

Nach der Erfindung ist demnach eine Grundplatte vorgesehen, auf der das Zubehörteil befestigt ist. Dabei kann es sich bei dem Zubehörteil um einen Tankrucksack, einer Audio- oder Navigationseinrichtung oder Sonstigem handeln. Die Grundplatte weist zur Festlegung des Zubehörteils Rastnasen auf, die in entsprechende aufbaufeste Rastöffnungen des Motorrads eingreifen. Auf diese Weise sind beim Festlegen des Zubehörteils lediglich die Rastnasen der Trägerplatte über den Rastöffnungen des entsprechenden Fahrzeugabschnitts auszurichten und dann mit einem leichten Druck die Rastnasen zum Verankern in die Rastöffnungen einzuführen.

In einer bevorzugten Ausführung sieht die Erfindung zwei Arten von Rastnasen vor, die in Fahrtrichtung gesehen hintereinander angeordnet sind. Die erste Art ragt feststehend nach unten von der Grundplatte ab, während die andere Art dort nachgiebig, vorzugsweise federbelastet verschwenkbar ist. Auf diese Weise lassen sich die feststehenden Rastnasen in ihre korrespondierenden Rastöffnungen am Fahrzeugaufbau verhakend einfädeln, das Zubehörteil nach unten schwenken bis die federbelasteten Rastnasen gegen die für sie vorgesehenen Rastöffnungen stoßen. Diese Rastnasen werden beim weiteren Niederdrücken gegen die Kraft der auf sie wirkenden Feder zurückgedrängt und in die Rastöffnungen gedrückt, um dann - nach Erreichen der endgültigen Lage des Grundplatte - durch die Federkraft wieder nach vorne zu verschwenken und einen Abschnitt der Rastöffnungen ebenfalls verhakend zu hintergreifen.

Sofern im Bereich des anzubringenden Zubehörteils ein Kraftstofftank des Motorrads vorgesehen ist, können die Rastöffnungen direkt in der Wandung des Tanks vorgesehen sein. Dies dürfte sich aber in meisten Fällen aufgrund der Gestaltung des Tanks, der Wandstärke und auch aus Sicherheitsgründen verbieten. Vorteilhafter ist es, völlig unabhängig vom Kraftstofftank, den Fahrzeugaufbau mit einem Rahmen zu versehen, in dem die Rastöffnungen eingearbeitet sind. Zweckmäßigerweise weist dieser Rahmen zwei in Fahrtrichtung verlaufende Rahmenschenkel auf, die zumindest einen Teil der Rastöffnungen aufnehmen. Um eine ausreichende Stabilität zu erhalten, ist es weiter vorteilhaft, die beiden Rahmenschenkel in eine geschlossene Platte übergehen zu lassen, in der wiederum der restliche Teil der Rastöffnungen vorgesehen ist.

Weitere Vorteile der Erfindung ergeben sich aus der nachfolgenden Beschreibung und der dazugehörenden Zeichnung. Es zeigen:
- Figur 1: als Orientierungsbild ein Motorrad mit Fahrer und Tankrucksack,
- Figur 2: in Pfeilrichtung A nach Fig. 1 gesehen, einen Teilausschnitt des Motorrads ohne Fahrer und Tankrucksack, in vergrößertem Maßstab und
- Figur 3: eine Grundplatte mit angedeutetem Tankrucksack.

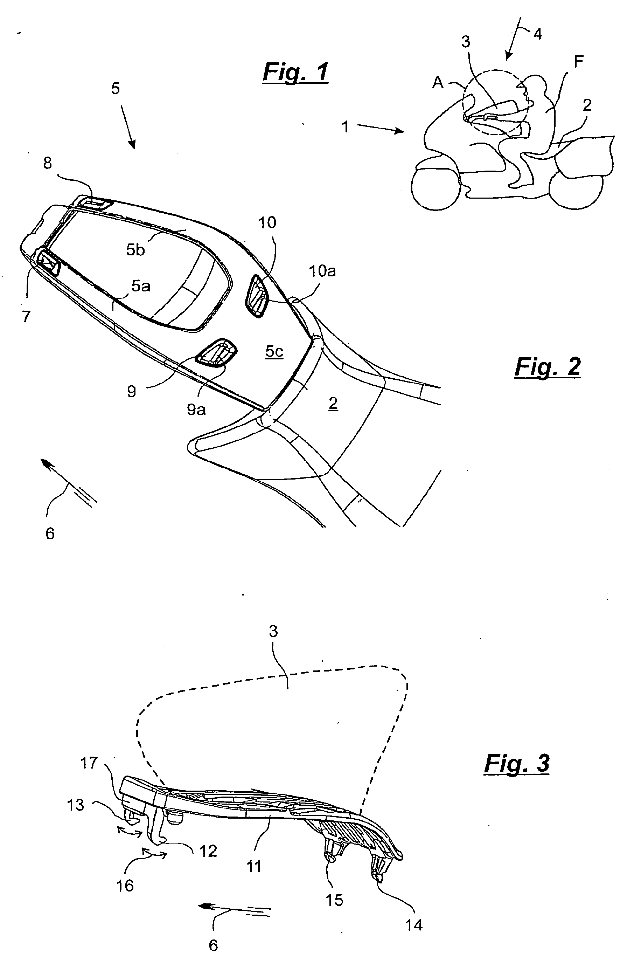

Das kleine Bild nach Figur 1 zeigt die Silhouette eines Motorrads 1 mit einem Fahrzeugsitz 2, auf dem ein Fahrer F sitzt. Vor dem Fahrer F befindet sich auf einem nicht näher erkennbaren fahrzeugfesten Abschnitt ein Tankrucksack 3. Häufig befindet sich bei den Motorrädern im Bereich dieses fahrzeugfesten Abschnitts der Kraftstofftank, für die vorliegende Erfindung ist dies aber ohne Belang. Der Kraftstofftank kann ebenso unter dem Sitz oder anderswo untergebracht sein.

Figur 2 zeigt vergrößert den Abschnitt des Motorrads 1, der mit einem Kreis A in Fig. 1 ausgewählt ist in Blickrichtung eines Pfeils 4. Es ist abschnittsweise der Fahrzeugsitz 2 erkennbar, vor dem sich in Fahrtrichtung ein fest mit dem Motorradaufbau verbundener Rahmen 5 erstreckt. Die Fahrtrichtung selbst ist durch einen Pfeil 6 gekennzeichnet. Der Rahmen 5 besteht aus zwei Rahmenschenkeln 5a, 5b, die im Abstand zueinander angeordnet sind und in Fahrtrichtung 6 verlaufen. Entgegen der Fahrtrichtung gehen die beiden Rahmenschenkel 5a und 5b in eine, dem Fahrer zugewandten und in sich geschlossene Platte 5c über. An den der Platte 5c abgewandten Enden weisen die Rahmenschenkel 5a, 5b je eine Rastöffnung 7 und 8 auf. Zwei weitere Rastöffnungen 9 und 10 befinden sich in Flucht mit den Rastöffnungen 7 und 8 in der Platte 5c.

Die Rastöffnungen 7,8 und 9,10 dienen zum Befestigen eines Zubehörteils, wie es in Fig. 3 schematisch angedeutet ist, auf dem Motorrad. Figur 3 zeigt eine formstabile rechteckige Grundplatte 11, deren Unterseitenkontur in etwa dem Verlauf der Oberseite des Rahmens 5 nachgebildet ist. Auf dem Rahmen ist in gestrichelt der Tankrucksack 3 nach Fig. 1 angedeutet. Auf der Grundplatte 1 könnte aber auch anderes Zubehör befestigt sein.

In den Eckabschnitten weist die Grundplatte Rastnasen 12, 13 und 14, 15 auf. Dabei sind die Rastnasen 12, 13 - wie Doppelpfeile 16 andeuten - schwenkbar an der Unterseite der Grundplatte 11 angelenkt. Sie lassen sich von der in der Zeichnung dargestellten stabilen Ruhe- bzw. Verankerungsposition in eine instabile Öffnungsposition verschwenken. Eine Griffleiste 17 verbindet die beiden schwenkbaren Rastnasen 12, 13 und durch deren Betätigen werden sie gleichzeitig in Zeichnungsebene gesehen nach links in die Öffnungsposition verschwenkt. Eine nicht erkennbare Feder beaufschlagt die Griffleiste 17 in der Weise, dass die Rastnasen 12, 13 in Zeichnungsebene gesehen nach rechts, also in Ruhe- bzw. Verankerungsposition gedrückt werden. Ein ebenfalls nicht erkennbarer Anschlag begrenzt dabei den Schwenkwinkel. Die Rastnasen 14, 15 sind demgegenüber feststehend an der Unterseite der Grundplatte 11 angeformt.

Die Rastnasen 12 und 13 sind den Rastöffnungen 7 und 8 (Figur 2) zugeordnet und die Rastnasen 14 und 15 den Rastöffnungen 9 und 10. Beim Befestigen der Grundplatte 11 bzw. des Tankrucksacks 3 auf dem Motorrad wird die Grundplatte von schräg oben mit ihren Rastnasen 14, 15 in die Rastöffnungen 9, 10 eingefädelt. Hierfür sehen die Rastöffnungen Querstege 9a, 10a vor, die von den Rastnasen 14, 15 untergriffen werden. Sodann wird die Grundplatte nach unten gekippt - die Drehachse hierfür bilden die Querstege 9a, 10a zusammen mit den hintergreifenden Rastnasen 14, 15 - bis die schwenkbaren Rastnasen 12, 13 gegen einen vorderen Rand der Rastöffnungen 7, 8 stoßen. Durch weiteres Niederdrücken werden die Rastnasen 12, 13 gegen die Kraft der Feder nach hinten gedrückt und schnappen schließlich in die Rastöffnungen 7, 8 ein. Dabei hintergreifen sie die Unterseite des vorderen Öffnungsrands der Rastöffnungen 7, 8. Der Tankrucksack 3 ist damit sicher auf dem Motorrad befestigt.

Beim Abnehmen des Tankrucksacks 3 wird die Griffleiste 17 nach oben gezogen, die Rastnasen 12, 13 schwenken aus und geben die Grundplatte zum Verschwenken nach oben frei. Damit lässt sich die Grundplatte 11 mit ihren Rastnasen 14, 15 aus den Rastöffnungen 9, 10 lösen und der Tankrucksack 3 kann abgenommen werden.

Die Griffleiste 17 weist einen in Zeichnung nicht erkennbaren Abschnitt auf, der mit einer Signalfarbe eingefärbt und normalerweise verdeckt ist. Sollten beim Festlegen des Tankrucksacks 3 die Rastnasen 12, 13 nicht vollständig einrasten, bleibt dieser Abschnitt sichtbar und signalisiert dem Fahrer, dass das Gepäckstück noch nicht ordnungsgemäß verriegelt ist.

## Patentansprüche

1. Zubehörteil für ein Motorrad, wie Tankrucksack (3), das abnehmbar und - in Fahrtrichtung gesehen - vor dem Motorradfahrer (F) am Fahrzeugaufbau festlegbar ist, **dadurch gekennzeichnet, dass** das Zubehörteil eine Grundplatte (11) mit Rastnasen (12, 13 und 14, 15) aufweist, die das Zubehörteil in korrespondierenden Rastöffnungen (7, 8 und 9, 10) des Fahrzeugaufbaus fixieren, wobei wenigstens eine der Rastnasen (12, 13) und/oder der Rastöffnungen nachgiebig ausgelegt ist.

2. Zubehörteil nach Anspruch 1, **dadurch gekennzeichnet, dass** an der dem Fahrzeugaufbau zugewandten Unterseite der Grundplatte (11) - in Fahrtrichtung gesehen - zwei unterschiedliche Arten von Rastnasen (12, 13 und 14, 15) vorgesehen sind, wobei die eine Art von Rastnasen (14, 15) feststehend an der Grundplatte (11) angeordnet sind, und die andere Art von Rastnasen (12, 13) federbelastet an der Grundplatte (11) angelenkt sind.

3. Zubehörteil nach Anspruch 1 oder 2, **dadurch gekennzeichnet, dass** im Bereich der Grundplatte (11) ein Hinweis bei nicht ordnungsgemäß fixierten Zubehörteil erscheint.

4. Zubehörteil nach Anspruch 2 oder 3, **dadurch gekennzeichnet, dass** die eine Art der Rastnasen (12, 13) über eine Griffleiste (17) und gegen die Kraft der Feder von einer stabilen Ruhe- bzw. Verankerungsposition in eine instabile Öffnungsposition schwenkbar sind, und dass die Griffleiste (17) einen mit einer Signalfarbe eingefärbten Abschnitt aufweist, der solange sichtbar ist, bis die Rastnasen (12, 13) sich vollständig in ihrer Ruhe- bzw. Verankerungsposition befinden.

5. Motorrad (1) mit einem Fahrzeugaufbau, das - in Fahrtrichtung gesehen - vor dem Fahrer (F) einen fahrzeugfesten Abschnitt aufweist für die Anbringung von Zubehörteilen, wie Tankrucksack (3), **dadurch gekennzeichnet, dass** der fahrzeugfeste Abschnitt Rastöffnungen (7, 8 und 9, 10) aufweist für das Eingreifen von am Zubehörteil angeordneten Rastnasen (12, 13 und 14, 15).

6. Motorrad nach Anspruch 5, **dadurch gekennzeichnet, dass** der fahrzeugfeste Abschnitt als ein Rahmen (5) mit zwei, im Abstand zu einander in Fahrtrichtung verlaufenden Rahmenschenkeln (5a, 5b) ausgelegt ist und dass die Rahmenschenkel (5a, 5b) Rastöffnungen (7, 8) für das Fixieren des Zubehörteils aufweisen.

7. Motorrad nach Anspruch 6, **dadurch gekennzeichnet, dass** die Rahmenschenkel (5a, 5b) nach hinten - entgegen der Fahrtrichtung - in eine geschlossene Platte (5c) übergehen und dass in der Platte (5c) Rastöffnungen (9, 10) für das Fixieren des Zubehörteils vorgesehen sind.

## Claims

1. An accessory part for a motorcycle such as a tank back-pack (3) which is removable and, considered in the direction of travel, is fixed to the vehicle body in front of the driver (F), **characterised in that** the accessory part has a baseplate (11) with catches or lugs (12, 13 and 14, 15) which fix the accessory part in corresponding catch openings (7, 8 and 9, 10) in the body, wherein at least one of the lugs (12, 13) and/or one of the openings is constructed so as to be flexible.

2. An accessory part according to claim 1, **characterised in that** on the underside of the baseplate (11) facing the body, considered in the direction of travel, two different constructions of lugs (12, 13 and 14, 15) are provided, wherein one construction of lugs (14, 15) is fixed to the baseplate (11) and the other construction of lugs (12, 13) is pivoted to the baseplate (11) and spring-biased.

3. An accessory part according to claim 1 or claim 2, **characterised in that** if the accessory part is not fixed properly, a notice appears in the neighbourhood of the baseplate (11).

4. An accessory part according to claim 2 or claim 3, **characterised in that** one construction of lugs (12, 13) is pivotable, via a handle strip (17) and against the force of the spring, from a stable rest or anchored position into an unstable open position, and the strip (17) has a coloured signal portion which is visible until the lugs (12, 13) are completely in their rest or anchored position.

5. A motorcycle (1) with a body which, considered in the direction of travel, has a fixed part in front of the driver (F) for attaching accessory parts such as a tank back-pack (3), **characterised in that** the fixed part has catch openings (7, 8 and 9, 10) for engagement of lugs (12, 13 and 14, 15) disposed on the accessory part.

6. A motorcycle according to claim 5, **characterised in that** the fixed part is a frame (5) with two limbs (5a, 5b) spaced apart from on another in the direction of travel, and the limbs (5a, 5b) have catch openings (7, 8) for fixing the accessory part.

7. A motorcycle according to claim 6, **characterised in that** at the rear (against the direction of travel) the limbs (5a, 5b) merge into a closed plate (5c) and the plate (5c) is formed with catch openings (9, 10) for fixing the accessory part.

## Revendications

1. Accessoire pour moto tel qu'un sac de réservoir (3), qui se fixe de manière amovible devant le motocycliste (F) (selon le sens de circulation) sur la structure du véhicule,
**caractérisé en ce que**
l'accessoire comporte une plaque de base (11) munie de becs d'enclipsage (12, 13 et 14, 15) qui fixent l'accessoire dans des orifices d'enclipsage (7, 8 et 9, 10) correspondants du châssis du véhicule et
au moins l'un des becs d'enclipsage (12, 13) et/ou des orifices d'enclipsage est souple.

2. Accessoire selon la revendication 1,
**caractérisé en ce que**
la face inférieure de la plaque de base (11) tournée vers le châssis du véhicule, présente, selon le sens de déplacement, deux types différents de becs d'enclipsage (12, 13 et 14, 15), l'un des types de becs d'enclipsage (14, 15) étant fixe par rapport à la plaque de base (11) et l'autre type de becs d'enclipsage (12, 13) étant articulé par ressort à la plaque de base (11).

3. Accessoire selon la revendication 1 ou 2,
**caractérisé en ce qu'**
une indication apparaît dans la région de la plaque de base (11) si l'accessoire semble non fixé correctement.

4. Accessoire selon la revendication 2 ou 3,
**caractérisé en ce que**
les becs d'enclipsage (12, 13) d'un type peuvent être basculés par et contre la force développée par un ressort de la position stable de repos ou d'accrochage dans une position instable d'ouverture et,
la poignée (17) comporte un segment teinté par une couleur de signalisation qui est visible jusqu'à ce que les becs d'enclipsage (12,13) se trouvent complètement en position de repos ou position accrochée.

5. Moto (1) comportant une carosserie pourvue devant le conducteur (F) dans la direction de circulation, d'un segment solidaire du véhicule pour installer des accessoires tels qu'un sac de réservoir (2)
**caractérisée en ce que**
le segment solidaire du réservoir comporte des orifices d'accrochage (7, 8 et 9, 10) pour la pénétration de becs d'accrochage (12, 13 et 14, 15) de l'accessoire.

6. Moto selon la revendication 5,
**caractérisée en ce que**
le segment solidaire du véhicule est un cadre 5 muni de deux branches (5a, 5b) écartées l'une de l'autre dans la direction de circulation et
les branches (5a, 5b) du cadre comportent des orifices d'accrochage (7, 8) pour fixer l'accessoire.

7. Moto selon la revendication 6,
**caractérisée en ce que**
les branches (5a, 5b) du cadre rejoignent vers l'arrière, selon le sens opposé au sens de circulation, une plaque fermée (5c) et cette plaque (5c) comporte des orifices d'accrochage (9, 10) pour fixer l'accessoire.
